# EUROPEAN PATENT APPLICATION

(11) **EP 4 257 651 A1**
(43) Date of publication of application: **11.10.2023**
(21) Application number: 21900433.0
(22) Date of filing: 19.11.2021
(51) Int. Cl.: C09J 11/08, C09J 105/00, C09J 7/38

(54) **ADHESIVE COMPOSITION AND ADHESIVE TAPE**

(30) Priority: 01.12.2020 JP 2020199266
(71) Applicant: Nitto Denko Corporation, Ibaraki-shi Osaka 567-8680 (JP)
(72) Inventor: KUMADA, Tatsuya, Ibaraki-shi, Osaka 567-8680 (JP); OGINO, Yoshiko, Ibaraki-shi, Osaka 567-8680 (JP); HARA, Yusuke, Ibaraki-shi, Osaka 567-8680 (JP); NAITO, Tomonari, Ibaraki-shi, Osaka 567-8680 (JP)
(74) Representative: Müller-Boré & Partner Patentanwälte PartG mbB
(86) International application number: PCT/JP2021/042593
(87) International publication number: WO 2022/118678

(57) **Abstract**

PROBLEM TO BE SOLVED: To provide an adhesive composition and an adhesive tape that are excellent in adhesive strength to olefin resin.; SOLUTION: The adhesive composition contains a β-1,3-glucan derivative obtained by introducing an acyl group into β-1,3-glucan; and a petroleum-based resin. The adhesive tape (1) includes an adhesive layer (3) formed from the adhesive composition.

## Description

### TECHNICAL FIELD

The present invention relates to an adhesive composition and an adhesive tape.

### BACKGROUND ART

There has been known an adhesive composition containing a β-1,3-glucan derivative obtained by introducing an acyl group into β-1,3-glucan (ref: for example, Patent Document 1 below). Since the β-1,3-glucan derivative is a polysaccharide of biological origin, the adhesive agent described in Patent Document 1 has a small environmental load as compared to conventional adhesive agents using petroleum as a raw material.

### Citation List

### Patent Document

Patent Document 1: Japanese Unexamined Patent Publication No. 2018-154723

### SUMMARY OF THE INVENTION

### PROBLEM TO BE SOLVED BY THE INVENTION

Depending on the applications, adhesive compositions may be required to have excellent adhesive strength to olefin resin. Such applications are wide-ranging. Specifically, the applications include food packaging materials, daily-use containers, vehicle interior materials, wire coating materials, and building materials.

However, the adhesive composition described in Patent Document 1 still cannot satisfy the above-described requirements because of insufficient adhesive strength to olefin resin.

The present invention provides an adhesive composition and an adhesive tape that have excellent adhesive strength to olefin resin.

### MEANS FOR SOLVING THE PROBLEM

The present invention (1) includes an adhesive composition, containing a β-1,3-glucan derivative obtained by introducing an acyl group into β-1,3-glucan; and a petroleum-based resin.

The present invention (2) includes the adhesive composition described in (1), in which the acyl group is represented by RCO-, where R is an aliphatic hydrocarbon group having 10 or more and 16 or less carbon atoms.

The present invention (3) includes the adhesive composition described in (1) or (2), in which an amount of the petroleum-based resin relative to 100 parts by weight of the β-1,3-glucan derivative is 10 parts by weight or more and 100 parts by weight or less.

The present invention (4) includes an adhesive tape including a base material layer, and an adhesive layer disposed on one surface in a thickness direction of the base material, the adhesive layer being formed from the adhesive composition described in any one of (1) to (3).

### EFFECTS OF THE INVENTION

The adhesive composition and the adhesive tape according to the present invention are excellent in adhesive strength to olefin resin.

### BRIEF DESCRIPTION OF THE DRAWINGS

FIG. 1 is a cross-sectional view of one embodiment of an adhesive tape according to the present invention.
FIG. 2 is a cross-sectional view of another embodiment of the adhesive tape.
FIG. 3 is a cross-sectional view of another embodiment of the adhesive tape.
FIG. 4 is a schematic view illustrating measurement of a peel rate under constant load in Example.

### DESCRIPTION OF THE EMBODIMENTS

### [Adhesive composition]

The adhesive composition of the present invention contains a β-1,3-glucan derivative and a petroleum-based resin.

### [β-1,3-glucan derivative]

The β-1,3-glucan derivative is a base polymer in the adhesive composition. The β-1,3-glucan derivative is a partially acylated compound in which a part of a hydroxyl group in glucose in β-1,3-glucan is acylated with an acyl group. That is, the β-1,3-glucan derivative is an acyl compound in which an acyl group is incorporated into β-1,3-glucan (obtained by introducing an acyl group into β-1,3-glucan).

The acyl group is represented by RCO-. Examples of R include a hydrocarbon group. Examples of the hydrocarbon group include an aliphatic hydrocarbon group, an alicyclic hydrocarbon group, and an aromatic hydrocarbon group, and preferably, an aliphatic hydrocarbon group is used. Examples of the aliphatic hydrocarbon group include a saturated aliphatic hydrocarbon group and an unsaturated aliphatic hydrocarbon group, and preferably, a saturated aliphatic hydrocarbon group, that is, an alkyl group is used. Examples of the alkyl group include a linear alkyl group and a branched alkyl group, and preferably, a linear alkyl group is used. The alkyl group has, for example, 3 or more carbon atoms, and for example, 17 or less carbon atoms. Examples of the linear alkyl group include propyl, butyl, pentyl, hexyl, heptyl, octyl, nonyl, decyl, dodecyl, tridecyl, tetradecyl, pentadecyl, hexadecyl, heptadecyl, and octadecyl. As the unsaturated aliphatic hydrocarbon group, alkenyl groups having, for example, 3 or more carbon atoms, preferably, 5 or more carbon atoms, and for example, 18 or less carbon atoms are used. Examples of the alkenyl group include heptadecenyl.

The aliphatic hydrocarbon group (alkyl group or alkenyl group) has preferably 6 or more carbon atoms, more preferably 8 or more carbon atoms, even more preferably 10 or more carbon atoms, and preferably 16 or less carbon atoms, more preferably 14 or less carbon atoms. When the number of carbon atoms of the aliphatic hydrocarbon group exceeds the lower limit and is less than the upper limit, the adhesive strength to olefin resin can be sufficiently improved.

Specific examples of the acyl group include butanoyl (an example of RCO where R is C₃H₇), pentanoyl (an example of RCO where R is C₄H₉), hexanoyl (an example of RCO where R is C₅H₁₁), heptanoyl (an example of RCO where R is C₆H₁₃), octanoyl (an example of RCO where R is C₇H₁₅), nonanoyl (an example of RCO where R is C₈H₁₇), decanoyl (an example of RCO where R is C₉H₁₉), lauroyl (i.e., dodecanoyl) (an example of RCO where R is C₁₁H₂₃), myristoyl (i.e., tetradecanoyl) (an example of RCO where R is C₁₃H₂₇), palmitoyl (i.e., hexadecanoyl) (an example of RCO where R is C₁₅H₃₁), stearoyl (i.e., octadecanoyl) (an example of RCO where R is C₁₇H₃₅), oleoyl (an example of RCO where R is C₁₇H₃₃), and nonadecanoyl (an example of RCO where R is C₁₈H₃₇). Preferably, lauroyl, myristoyl, and palmitoyl are used.

Types, physical properties, and production methods of the β-1,3-glucan derivative are described in, for example, Japanese Unexamined Patent Publication No. 2018-154723.

The proportion of the β-1,3-glucan derivative in the solid content of the adhesive composition is, for example, 50% by weight or more, preferably 60% by weight or more, more preferably 70% by weight or more, and for example, 99% by weight or less, preferably 90% by weight or less, more preferably 80% by weight or less.

The β-1,3-glucan derivative is identified by ¹H-NMR spectrum and FT-IR spectrum. Details of the identification is described in Japanese Unexamined Patent Publication No. 2018-154723.

### [Petroleum-based resin]

The petroleum-based resin functions as a tackifier to enhance adhesive strength of the adhesive composition to olefin resin. The adhesive composition of the present invention contains the petroleum-based resin as a tackifier. The petroleum-based resin can improve the adhesive strength of the adhesive composition to olefin resin.

Examples of the petroleum-based resin include aliphatic (C5) petroleum resins, aromatic (C9) petroleum resins, aliphatic/aromatic (C5/C9) copolymerized petroleum resins, hydrogenated products thereof, modified products thereof (e.g., maleic anhydride modified products), coumarone resins, coumarone-indene resins, and styrene-based tackifiers. These can be used alone or in combination. As the petroleum-based resin, preferably, those hydrogenated products are used in view of enhancing the adhesive strength to olefin resin, more preferably, hydrogenated products of aromatic (C9) petroleum resins are used.

A hydrogenation rate of the hydrogenated product is not particularly limited. The hydrogenation rate is, for example, 50% or more, and preferably 80% or more, and for example, 100% or less, in view of enhancing the adhesive strength to olefin resin.

The amount of the petroleum-based resin relative to 100 parts by weight of the β-1,3-glucan derivative is, for example, 5 parts by weight or more, preferably 10 parts by weight or more, more preferably 20 parts by weight or more, and for example, 150 parts by weight or less, preferably 100 parts by weight or less, more preferably 80 parts by weight or less, even more preferably 60 parts by weight or less, particularly preferably 40 parts by weight or less. When the amount of the petroleum-based resin relative to 100 parts by weight of the β-1,3-glucan derivative exceeds the above-described lower limit or is less than the above-described upper limit, the adhesive strength to olefin resin can be further enhanced.

As the petroleum-based resin, commercially available products are used.

The petroleum-based resin is identified by ¹H-NMR spectrum and FT-IR spectrum, gel permeation chromatography, and/or mass spectrometry.

### [Additive]

The adhesive composition may contain an additive at an appropriate ratio. Examples of the additive include other base polymers (acrylic resin), other tackifiers (rosin-based resin and terpene-based resin), viscosity modifiers, leveling agents, plasticizers, fillers, stabilizers, preservative agents, and antioxidants.

To produce the adhesive composition, the β-1,3-glucan derivative, the petroleum-based resin, and as necessary, an additive are blended and mixed. Alternatively, the above-described components can also be dissolved in an organic solvent to prepare a solution containing the adhesive composition. The solution may be referred to as a "solution of the adhesive composition". The organic solvent includes a low polar solvent and a high polar solvent.

Examples of the low polar solvent include an aromatic compound, an alicyclic compound, and a chain saturated hydrocarbon compound. Examples of the aromatic compound include toluene. Examples of the alicyclic compound include cyclohexane and methylcyclohexane. Examples of the chain saturated hydrocarbon compound include pentane, hexane, and heptane.

Examples of the high polar solvent include ketone, ester, and alcohol. Examples of the ketone include methyl ethyl ketone. Examples of the ester include ethyl acetate. Examples of the alcohol include methanol and ethanol.

These organic solvents can be used alone or in combination. Preferably, a low polar solvent is used alone, and a low polar solvent and a high polar solvent are used in combination.

The β-1,3-glucan derivative and the petroleum-based resin can also be dissolved in water using an emulsifier and/or a dispersant to prepare an aqueous dispersion containing the adhesive composition. The aqueous dispersion may be referred to as an "aqueous dispersion of the adhesive composition".

The β-1,3-glucan derivative and the petroleum-based resin can also be mixed using a kneader or the like to prepare a hot-melt resin of the adhesive composition. The hot-melt resin of the adhesive composition may be simply referred to as a "hot-melt resin".

The solid content in the solution of the adhesive composition or the aqueous dispersion of the adhesive composition is, for example, 1% by weight or more, preferably 10% by weight or more, and for example, 50% by weight or less, preferably 40% by weight or less.

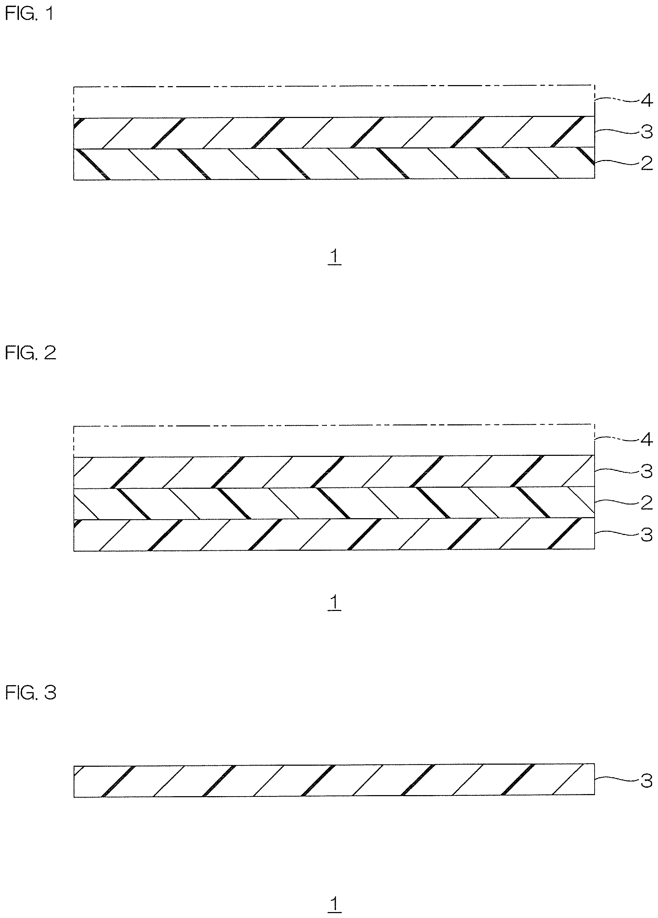

As shown in FIG. 1, a surface of a base material sheet 2 is coated with the solution of the adhesive composition or the aqueous dispersion of the adhesive composition, and thereafter dried by heating to form an adhesive layer 3. The adhesive layer 3 can also be formed by hot-melt coating the surface of the base material sheet 2 with the above-described hot-melt resin, and thereafter cooling the hot-melt resin. In this manner, an adhesive tape 1 having the base material sheet 2 and the adhesive layer 3 can be produced.

Examples of a material of the base material sheet 2 include resin. Examples of the resin include polyester. The base material sheet 2 has a thickness of 0.5 µm or more, and for example, 900 µm or less.

The adhesive layer 3 has a thickness of, for example, 1 µm or more, and for example, 1000 µm or less. The adhesive tape 1 has a thickness of, for example, 2 µm or more, and for example, 1100 µm or less.

Further, as shown in FIG. 2, the adhesive tape 1 can also include the base material sheet 2, and the adhesive layers 3 disposed on front and back surfaces of the base material sheet 2.

Alternatively, as shown in FIG. 3, a base material-less type adhesive tape 1 including the adhesive layer 3 alone without using the base material sheet 2 can also be obtained. The adhesive tape 1 is formed from the adhesive layer 3 alone.

### [Adhesive strength]

The adhesive strength of the adhesive layer 3 to a polypropylene plate at 23°C and 50% RH is, for example, 3.0 N/20 mm or more, preferably 3.5 N/20 mm or more, and for example, 20 N/20 mm or less. A measurement method of the adhesive strength of the adhesive layer 3 to the polypropylene plate is described in detail in Example below.

The adhesive layer 3 is peeled at a peel rate of, for example, 0.50 mm/hr or less, preferably 0.20 mm/hr or less, more preferably 0.10 mm/hr or less, even more preferably 0.05 mm/hr or less, and for example, 0.00 mm/hr or more under constant load against a polypropylene plate at 23°C and 50% RH. A measurement method of the peel rate of the adhesive layer 3 under constant load is described in detail in Example below. When the peel rate under constant load is low, it means excellent adhesion to olefin resin (i.e., high adhesive strength).

### [Effects of adhesive composition and adhesive tape]

The adhesive composition contains a petroleum-based resin as an essential tackifier. Therefore, the adhesive composition and the adhesive tape are excellent in adhesive strength to olefin resin. For this reason, the adhesive composition and the adhesive tape are used for a wide range of applications. Examples of the applications include food packaging materials, daily-use containers, vehicle interior materials, wire coating materials, and building materials.

In contrast to this, when the adhesive composition contains a terpene-based resin or a rosin-based resin as an essential tackifier, the adhesive strength to olefin resin cannot be sufficiently enhanced. Therefore, the above-described adhesive composition cannot be used for the above-described applications.

### [Modified examples of adhesive tape]

In the modified example, the same reference numerals are provided for members and steps corresponding to each of those in one embodiment, and their detailed description is omitted. Further, the modified example can achieve the same function and effect as that of one embodiment unless otherwise specified. Furthermore, one embodiment and the modified examples thereof can be appropriately used in combination.

As shown in phantom lines in FIGS. 1 and 2, the adhesive tape 1 of the modified example further includes a release sheet 4 disposed on the surface of the adhesive layer 3. Example

Specific numerical values such as blending ratios (content), physical property values, and parameters used in the following description can be replaced with the upper limit value (numeral values defined with "or less" or "less than") or the lower limit value (numeral values defined with "or more" or "more than") of the corresponding blending ratios (content), physical property values, and parameters described in the above-mentioned "DESCRIPTION OF THE EMBODIMENTS". The "parts" and "%" are based on weight unless otherwise specified in the following description.

### [Synthesis Examples of β-1,3-glucan derivative]

### Synthesis Example 1

### [Synthesis of myristoylated β-1,3-glucan (RCO where R (aliphatic hydrocarbon group) has 13 carbon atoms)]

To a reaction vessel equipped with a condenser tube, a nitrogen inlet tube, a thermometer, and a stirrer, 13.3 g of β-1,3-glucan (Euglena Co., Ltd.: 82.03 mmol of glucose part) and 1000 mL of dehydrated pyridine (FUJIFILM Wako Pure Chemical Corporation) were added, and the mixture was stirred for 0.5 hours at a temperature of 92°C under a nitrogen atmosphere. To the obtained pyridine solution, 133.05 mL of myristoyl chloride (492.2 mmol: FUJIFILM Wako Pure Chemical Corporation) was added, and the mixture was heated to 92°C and then stirred for 1 hour. In this manner, a reaction mixture was prepared.

Thereafter, a solid intermediate was obtained from the reaction mixture. First, 1 hour after the start of the reaction, 2000 mL of methanol was added to the reaction mixture and cooled to room temperature. Then, a solid thus formed was taken out and then dissolved in 600 mL of toluene to prepare a toluene solution. The toluene solution was poured into 2000 mL of methanol under stirring to give a solid. By repeating the process of dissolving the solid in toluene and pouring the toluene solution into methanol 3 times, washing was performed to give a solid. The solid was dried at 60°C for 4 hours under reduced pressure. In this manner, a myristoylated β-1,3-glucan was obtained. That is, the myristoylated β-1,3-glucan was a β-1,3-glucan derivative obtained by introducing myristoyl into β-1,3-glucan.

### Synthesis Example 2

### [Synthesis of palmitoylated β-1,3-glucan (RCO where R (aliphatic hydrocarbon group) has 15 carbon atoms)]

In the same manner as in Synthesis Example 1, a palmitoylated β-1,3-glucan was obtained. However, 133.05 mL (492.2 mmol) of myristoyl chloride was changed to 150.21 mL of palmitoyl chloride (492.2 mmol: FUJIFILM Wako Pure Chemical Corporation). That is, the palmitoylated β-1,3-glucan was a β-1,3-glucan derivative obtained by introducing palmitoyl into β-1,3-glucan.

### Synthesis Example 3

### [Synthesis of lauroylated β-1,3-glucan (RCO where R (aliphatic hydrocarbon group) has 11 carbon atoms)]

In the same manner as in Synthesis Example 1, a lauroylated β-1,3-glucan was obtained. However, 133.05 mL (492.2 mmol) of myristoyl chloride was changed to 113.81 mL of lauroyl chloride (492.2 mmol: FUJIFILM Wako Pure Chemical Corporation). That is, the lauroylated β-1,3-glucan was a β-1,3-glucan derivative obtained by introducing lauroyl into β-1,3-glucan.

### Synthesis Example 4

### [Synthesis of octanoylated β-1,3-glucan (RCO where R (aliphatic hydrocarbon group) has 7 carbon atoms)]

In the same manner as in Synthesis Example 1, an octanoylated β-1,3-glucan was obtained. However, 133.05 mL (492.2 mmol) of myristoyl chloride was changed to 84.18 mL of octanoyl chloride (492.2 mmol: FUJIFILM Wako Pure Chemical Corporation). That is, the octanoylated β-1,3-glucan was a β-1,3-glucan derivative obtained by introducing octanoyl into β-1,3-glucan.

### Synthesis Example 5

### [Synthesis of butanoylated β-1,3-glucan (RCO where R (aliphatic hydrocarbon group) has 3 carbon atoms)]

In the same manner as in Synthesis Example 1, a butanoylated β-1,3-glucan was obtained. However, 133.05 mL (492.2 mmol) of myristoyl chloride was changed to 50.98 mL of butanoyl chloride (492.2 mmol: FUJIFILM Wako Pure Chemical Corporation). That is, the butanoylated β-1,3-glucan was a β-1,3-glucan derivative obtained by introducing butanoyl into β-1,3-glucan.

### Synthesis Example 6

### [Synthesis of oleoylated β-1,3-glucan (RCO where R (aliphatic hydrocarbon group) has 17 carbon atoms)]

In the same manner as in Synthesis Example 1, an oleoylated β-1,3-glucan was obtained. However, 133.05 mL (492.2 mmol) of myristoyl chloride was changed to 162.38 mL of oleoyl chloride (492.2 mmol: FUJIFILM Wako Pure Chemical Corporation). That is, the oleoylated β-1,3-glucan was a β-1,3-glucan derivative obtained by introducing oleoyl into β-1,3-glucan.

### [Production of adhesive tape]

### [Example 1]

A toluene solution (solids concentration of 10% by weight) of myristoylated β-1,3-glucan was prepared.

Separately, a toluene solution (solids concentration 50% by weight) of ARKON P-125 (Arakawa Chemical Industries, hydrogenated product of aromatic (C9) petroleum resin, hydrogenation rate 90 to 100%), which is a petroleum-based resin, was prepared.

Then, the toluene solution of myristoylated β-1,3-glucan and the toluene solution of ARKON P-125 were blended so that the ARKON P-125 amounted to 30 parts by weight relative to 100 parts by weight of the myristoylated β-1,3-glucan, and the mixture was then stirred. In this manner, a toluene solution of an adhesive composition was obtained.

The toluene solution of the adhesive composition was applied to a surface of a polyester base material (Toray Industries, Inc.: Lumirror S-10, thickness 25 µm) as a base material sheet 2 using an applicator (manufactured by Tester Sangyo Co., Ltd.), and dried at 50°C for 5 minutes and then at 120°C for 5 minutes. In this manner, an adhesive tape 1 including the base material sheet 2 and an adhesive layer 3 having a thickness of 50 µm was produced.

### Example 2 and Comparative Examples 1 and 2

The adhesive composition and the adhesive tape 1 were produced in the same manner as in Example 1. However, the type of the tackifier was changed as follows. The changes are also shown in Table 1.

In Example 2, ARKON M-135 (Arakawa Chemical Industries, hydrogenated product of aromatic (C9) petroleum resin, hydrogenation rate 90 to 100%) was used in place of ARKON P-125.

In Comparative Example 1, SUPER ESTER A-125 (Arakawa Chemical Industries), which is a rosin-based resin, was used in place of ARKON P-125.

In Comparative Example 2, TO-125 (Arakawa Chemical Industries), which is a terpene-based resin, was used in place of ARKON P-125.

### [Examples 3 to 7]

The adhesive composition and the adhesive tape 1 were produced in the same manner as in Example 1. However, the type of carbon atom in the R (aliphatic hydrocarbon group) of the acyl (RCO) introduced into the β-1,3-glucan derivative was changed as follows. The changes are also shown in Table 2.

In Example 3, butanoylated β-1,3-glucan (RCO where R (aliphatic hydrocarbon group) has 3 carbon atoms) was used in place of the myristoylated β-1,3-glucan (RCO where R (aliphatic hydrocarbon group) has 13 carbon atoms).

In Example 4, octanoylated β-1,3-glucan (RCO where R (aliphatic hydrocarbon group) has 7 carbon atoms) was used in place of the myristoylated β-1,3-glucan (RCO where R (aliphatic hydrocarbon group) has 13 carbon atoms).

In Example 5, lauroylated β-1,3-glucan (RCO where R (aliphatic hydrocarbon group) has 11 carbon atoms) was used in place of the myristoylated β-1,3-glucan (RCO where R (aliphatic hydrocarbon group) has 13 carbon atoms).

In Example 6, palmitoylated β-1,3-glucan (RCO where R (aliphatic hydrocarbon group) has 15 carbon atoms) was used in place of the myristoylated β-1,3-glucan (RCO where R (aliphatic hydrocarbon group) has 13 carbon atoms).

In Example 7, oleoylated β-1,3-glucan (RCO where R (aliphatic hydrocarbon group) has 17 carbon atoms) was used in place of the myristoylated β-1,3-glucan (RCO where R (aliphatic hydrocarbon group) has 13 carbon atoms).

### [Examples 8 to 12]

The adhesive composition and the adhesive tape 1 were produced in the same manner as in Example 1. However, the amount of the ARKON P-125 relative to 100 parts by weight of the myristoylated β-1,3-glucan was changed as follows. The changes are also shown in Table 3.

In Example 8, the amount of the ARKON P-125 relative to 100 parts by weight of the myristoylated β-1,3-glucan was changed from 30 parts by weight to 5 parts by weight.

In Example 9, the amount of the ARKON P-125 relative to 100 parts by weight of the myristoylated β-1,3-glucan was changed from 30 parts by weight to 10 parts by weight.

In Example 10, the amount of the ARKON P-125 relative to 100 parts by weight of the myristoylated β-1,3-glucan was changed from 30 parts by weight to 50 parts by weight.

In Example 11, the amount of the ARKON P-125 relative to 100 parts by weight of the myristoylated β-1,3-glucan was changed from 30 parts by weight to 70 parts by weight.

In Example 12, the amount of the ARKON P-125 relative to 100 parts by weight of the myristoylated β-1,3-glucan was changed from 30 parts by weight to 90 parts by weight.

### [Evaluation]

The adhesive layers 3 of the adhesive tapes 1 in Examples and Comparative Examples were evaluated with respect to the following items. The results are shown in Tables 1 to 3. The results of Example 1 were given in Tables 1 to 3 for easy comparison to those of the other Examples.

### [Adhesive strength]

The adhesive tape 1 was cut into a size of 20 mm wide and 70 mm long to produce a sample.

The adhesive layer 3 of the sample was pressure-bonded to a polypropylene plate by reciprocating a 2 kg roller in an environment of 23°C and 50% RH. Further, the sample was allowed to stand for 30 minutes in the same environment. Thereafter, the "adhesive strength" was obtained by measuring a peel force (N/20 mm) when the sample was peeled off at a peel rate of 300 mm/min and a peel angle of 180° using a universal tensile testing machine, Autograph AG-IS (Shimadzu Corporation). The adhesive strength was measured in an environment of 23°C and 50% RH.

### [Peel rate under constant load]

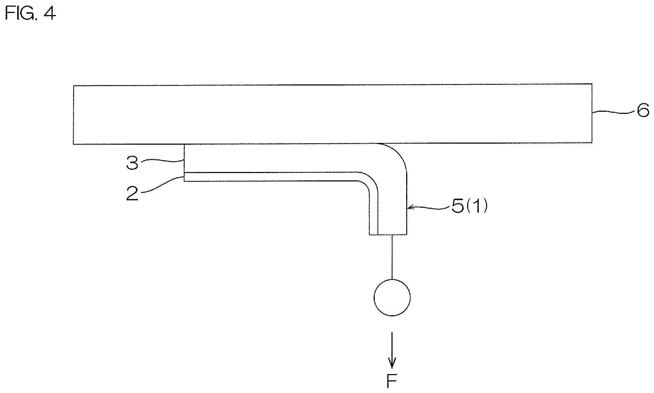

A sample similar to that used to measure the adhesive strength was prepared. The sample was pressure-bonded to a polypropylene plate by reciprocating a 2 kg roller in an environment of 23°C and 50% RH. Further, the sample was allowed to stand for 30 minutes in the same environment, and thereafter, as shown in FIG. 4, the polypropylene plate 6 was held horizontally in an environment of 23°C and 50% RH so that a surface having the sample 5 adhered thereto faced downward.

A load F of 10 g (0.098 N) was applied to one end in the longitudinal direction of the sample 5 so that a peel angle was 90°, and then, a peel distance (mm) after 24 hours was measured. In this manner, the peel rate (mm/hr) under constant load was determined.

However, in Example 3, the sample 5 was dropped after 24 hours, and therefore, the measurement time was changed to 1 minute.

### [Table 1]

**TABLE 1**

| | | Example 1 | Example 2 | Comparative Example 1 | Comparative Example 2 |
|---|---|---|---|---|---|
| β-1,3-glucan derivative | No. of carbon atoms in R of RCO (acyl group) | 13 | 13 | 13 | 13 |
| Tackifier | Type | Petroleum-based resin | Petroleum-based resin | Rosin-based resin | Terpene-based resin |
| | | Hydrogenenated product of aromatic petroleum resin | Hydrogenenated product of aromatic petroleum resin | | |
| | | ARKON P-125 | ARKON M-135 | SUPER ESTER A-125 | YS RESIN TO-125 |
| | Amount (parts by weight) relative to 100 parts by weight of β-1,3-glucan derivative | 30 | 30 | 30 | 30 |
| Evaluation | Adhesive strength to polypropylene plate (N/20 mm) | 3.9 | 3.0 | 2.4 | 2.9 |
| | Peel rate under constant load (mm/hr) | 0.03 | 0.03 | 0.58 | 0.60 |

### [Table 2]

**TABLE 2**

| | | Example 3 | Example 4 | Example 5 | Example 1 | Example 6 | Example 7 |
|---|---|---|---|---|---|---|---|
| β-1,3-glucan derivative | No. of carbon atoms in R of RCO (acyl group) | 3 | 7 | 11 | 13 | 15 | 17 |
| Tackifier | Type | Petroleum-based resin | Petroleum-based resin | Petroleum-based resin | Petroleum-based resin | Petroleum-based resin | Petroleum-based resin |
| | | Hydrogenenated product of aromatic petroleum resin | Hydrogenenated product of aromatic petroleum resin | Hydrogenenated product of aromatic petroleum resin | Hydrogenenated product of aromatic petroleum resin | Hydrogenenated product of aromatic petroleum resin | Hydrogenenated product of aromatic petroleum resin |
| | | ARKON P-125 | ARKON P-125 | ARKON P-125 | ARKON P-125 | ARKON P-125 | ARKON P-125 |
| | Amount (parts by weight) relative to 100 parts by weight of β-1,3-glucan derivative | 30 | 30 | 30 | 30 | 30 | 30 |
| Evaluation | Adhesive strength to polypropylene plate (N/20 mm) | 0.04 | 0.3 | 3.5 | 3.9 | 2.3 | 0.5 |
| | Peel rate under constant load (mm/hr) | over 3000 | 1.33 | 0.03 | 0.03 | 0.09 | 53.60 |

### [Table 3]

**TABLE 3**

| | | Example 8 | Example 9 | Example 1 | Example 10 | Example 11 | Example 12 |
|---|---|---|---|---|---|---|---|
| β-1,3-glucan derivative | No. of carbon atoms in R of RCO (acyl group) | 13 | 13 | 13 | 13 | 13 | 13 |
| Tackifier | Type | Petroleum-based resin | Petroleum-based resin | Petroleum-based resin | Petroleum-based resin | Petroleum-based resin | Petroleum-based resin |
| | | Hydrogenenated product of aromatic petroleum resin | Hydrogenenated product of aromatic petroleum resin | Hydrogenenated product of aromatic petroleum resin | Hydrogenenated product of aromatic petroleum resin | Hydrogenenated product of aromatic petroleum resin | Hydrogenenated product of aromatic petroleum resin |
| | | ARKON P-125 | ARKON P-125 | ARKON P-125 | ARKON P-125 | ARKON P-125 | ARKON P-125 |
| | Amount (parts by weight) relative to 100 parts by weight of β-1,3-glucan derivative | 5 | 10 | 30 | 50 | 70 | 90 |
| Evaluation | Adhesive strength to polypropylene plate (N/20 mm) | 2.0 | 2.9 | 3.9 | 4.0 | 2.9 | 2.2 |
| | Peel rate under constant load (mm/hr) | 0.88 | 0.16 | 0.03 | 0.00 | 0.00 | 0.00 |

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

The adhesive composition is used as a material for an adhesive layer of an adhesive tape.

### Description of Reference Numerals

- 1: adhesive tape
- 3: adhesive layer

## Claims

1. An adhesive composition, comprising
a β-1,3-glucan derivative in which an acyl group is incorporated into β-1,3-glucan; and
a petroleum-based resin.

2. The adhesive composition according to claim 1, wherein
the acyl group is represented by RCO-,
where R is an aliphatic hydrocarbon group having 10 or more and 16 or less carbon atoms.

3. The adhesive composition according to claim 1 or 2, wherein
an amount of the petroleum-based resin relative to 100 parts by weight of the β-1,3-glucan derivative is 10 parts by weight or more and 100 parts by weight or less.

4. An adhesive tape, comprising an adhesive layer made of an adhesive composition according to any one of claims 1 to 3.
